# FASCICULE DE BREVET EUROPEEN

(11) **EP 4 073 368 B1**
(45) Date de publication et mention de la délivrance du brevet: **27.09.2023**
(21) Numéro de dépôt: 20828046.1
(22) Date de dépôt: 03.12.2020
(51) Int. Cl.: F02C 7/32, F01D 25/28

(54) **PLATINE D'EQUIPEMENTS HYDRAULIQUES DE TURBOMACHINE AERONAUTIQUE**
HYDRAULIKHILFSGERÄTESPLATTE FÜR AERONAUTISCHE TURBOMASCHINE
HYDRAULIC ACCESSORIES PLATE FOR AERONAUTICAL TURBOMACHINE

(30) Priorité: 13.12.2019 FR 1914407
(43) Date de publication de la demande: 19.10.2022
(73) Titulaire: SAFRAN AIRCRAFT ENGINES, 75015 Paris (FR)
(72) Inventeur: DAUTREPPE, Frédéric, 77550 MOISSY-CRAMAYEL (FR); DUFOUR, Bertrand, Romain, Adrien, 77550 MOISSY-CRAMAYEL (FR); POU, Romain, Harold, Patrice, 77550 MOISSY-CRAMAYEL (FR)
(74) Mandataire: Cabinet Beau de Loménie
(86) Numéro de dépôt international: PCT/FR2020/052268
(87) Numéro de publication internationale: WO 2021/116570

(56) Documents cités:
- EP-A2- 2 098 757
- WO-A1-2010/086422
- WO-A1-2013/001238
- US-A1- 2012 117 982

## Description

### Domaine Technique

La présente invention se rapporte au domaine général du montage sur une turbomachine aéronautique, en particulier un turboréacteur, du boîtier pour l'entraînement d'accessoires et des équipements hydrauliques associés et elle concerne plus particulièrement une platine d'équipements fixée à un boîtier d'entrainement d'accessoires pour former un système d'accessoires.

### Technique antérieure

Dans un turboréacteur, les accessoires tels que les pompes pour la production d'énergie hydraulique, l'alimentation en carburant et la lubrification, les générateurs électriques pour la production de puissance électrique, etc. sont regroupés au sein d'un boîtier d'entrainement (ou de relais) d'accessoires communément appelé AGB (pour « Accessory GearBox ») qui est en outre entouré de différents équipements nécessaires à l'alimentation et l'asservissement en carburant ou en huile de la turbomachine mais sans liaison mécanique avec l'AGB. Un tel boîtier d'entrainement d'accessoires comprend généralement un ou plusieurs des trains d'engrenages qui sont entraînés en rotation par un prélèvement de puissance sur un arbre du turboréacteur et sur lesquels viennent se coupler les différents accessoires.

Des boîtiers d'entraînement d'accessoires de l'art antérieur sont divulgués dans les documents US2012/117982 A1, WO2013/001238 A1, WO2010/086422 A1 et EP2098757 A2.

Ces boîtiers d'entrainement d'accessoires sont généralement montés dans la zone du compartiment de soufflante du turboréacteur. Ils sont plus précisément suspendus à des brides formées sur le carter métallique de rétention de ce compartiment de soufflante.

En outre, l'optimisation de la trainée aérodynamique de la nacelle impose, pour limiter la surface frontale de la nacelle, de positionner des équipements non plus dans la nacelle (compartiment de soufflante) mais dans le compartiment dit « core » du turboréacteur (voir par exemple la demande FR2981986 au nom de la demanderesse), c'est-à-dire un compartiment inter-veines qui sépare la veine de flux primaire de la veine de flux secondaire d'un turboréacteur à double flux.

Toutefois, l'installation de l'ensemble des équipements qui possèdent ou non des parties entraînées en rotation par le boîtier d'entrainement d'accessoires pose encore un problème d'encombrement de ces équipements autour de ce boitier. C'est le cas en particulier des équipements carburant, c'est-à-dire les équipements qui sont typiquement affectés au circuit de carburant du turboréacteur.

### Exposé de l'invention

La présente invention a donc pour but principal de pallier un tel inconvénient en proposant une platine d'équipements hydrauliques qui permette d'obtenir un encombrement réduit dans le compartiment central du turboréacteur et donc un poids également réduit pour l'ensemble de ces équipements. Un autre objet de l'invention est de proposer un système d'accessoires intégrant un boitier d'entrainement d'accessoires qui présente un nombre de pièces réduit par rapport aux solutions actuelles et donc un coût moindre.

Ce but est atteint grâce à une platine d'équipements hydrauliques d'une turbomachine aéronautique comportant des canalisations de circulation d'un fluide en entrée et en sortie de chacun desdits équipements hydrauliques, une partie support d'un corps de boitier de chacun desdits équipements hydrauliques destiné à recevoir des moyens de fixation auxdits équipements hydrauliques, caractérisée en ce qu'elle comprend en outre une partie de corps de boitier de l'un au moins desdits équipements hydrauliques.

Selon un mode de réalisation avantageux, la platine d'équipements hydrauliques destinée à être fixée à un boitier d'entrainement d'accessoires, comporte en outre une partie destinée à être déportée par rapport au boitier d'entrainement d'accessoires, ladite partie déportée de la platine permettant la fixation d'équipements hydrauliques sur ses deux faces.

De préférence, lesdits équipements hydrauliques sont choisis parmi les équipements suivants : une pompe à carburant principale, un doseur de carburant, un filtre à carburant principal, un réchauffeur de carburant, un échangeur de chaleur principal. Lorsqu'elle comporte au moins le filtre à carburant principal, la partie de corps de boitier dudit équipement hydraulique est une partie de fond d'un bol destiné à recevoir une cartouche filtrante du filtre. Elle peut alors aussi comporter un capteur à pression différentielle (Delta/P) du filtre.

Lorsqu'elle comporte au moins le réchauffeur de carburant ou l'échangeur de chaleur principal, la partie de corps de boitier dudit équipement hydraulique est une partie inférieure de l'enveloppe du réchauffeur ou de l'échangeur destinée à recevoir une matrice d'échange. Elle peut alors aussi comporter un clapet de surpression du réchauffeur ou de l'échangeur un by-pass de l'échangeur de chaleur principal.

Lorsqu'elle comporte au moins la pompe à carburant principale, la partie de corps de boitier dudit équipement hydraulique est une partie inférieure du corps de pompe destinée à supporter et guider un arbre d'entrainement de la pompe.

L'invention concerne également un système d'accessoires comprenant une platine d'équipements hydrauliques telle que précitée et un boitier d'entrainement d'accessoires sur lequel la platine d'équipements hydrauliques est fixée avantageusement de façon déportée.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif et sur les lesquels :
[Fig. 1] la figure 1 est une vue externe d'un boitier d'entrainement d'accessoires monté en compartiment central et auquel est fixée une platine d'équipements selon l'invention,
[Fig. 2] la figure 2 représente en vue externe une platine d'équipements selon l'invention,
[Fig. 3] la figure 3 représente, sans ses équipements, la platine d'équipements de la figure 2 montée en extrémité du boitier d'entrainement d'accessoires de la figure 1, et
[Fig. 4] la figure 4 montre le réseau de canalisations internes et les différentes interfaces de la platine d'équipements de la figure 2.

### Description des modes de réalisation

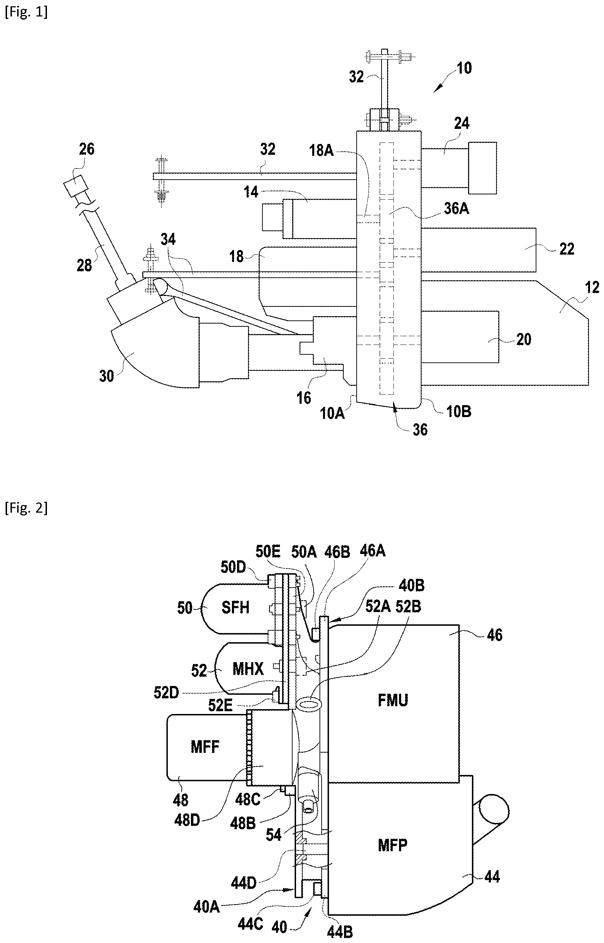

La figure 1 montre un boitier d'entrainement d'accessoires 10 monté en compartiment central (dit aussi « core ») d'un turboréacteur et susceptible d'intégrer une platine d'équipement selon l'invention. Bien entendu, le domaine d'application de l'invention peut concerner d'autres types de turbomachines aéronautiques qu'un turboréacteur.

Un tel boitier d'entrainement d'accessoires (ou AGB) entraine et supporte par exemple, sans que cette liste soit limitative, un ou plusieurs générateurs électriques 12, 14, un alternateur 16, un groupe de lubrification 18, un démarreur 20, un déshuileur 22 et d'autres composants (par exemple une pompe hydraulique 24) qui constituent les équipements auxiliaires du moteur et de génération de puissance de l'aéronef. Le boitier 10 est accouplé au rotor 26 de la turbomachine, par l'intermédiaire d'un arbre radial de transmission de puissance 28 via une boite de retour d'angle 30. Le boitier d'entrainement d'accessoires 10 est typiquement suspendu à un carter du moteur (non représenté) via des bielles de suspension 32, 34.

De façon connue en soi, un tel boitier comporte un ou plusieurs trains d'engrenages 36 qui sont composés chacun de plusieurs roues dentées et qui sont entraînés en rotation par l'arbre radial de transmission de puissance 28 couplé au rotor 26 de la turbomachine. Chaque accessoire est généralement monté contre l'une des faces latérales 10A, 10B, sensiblement plane, du boîtier 10 et comporte un arbre d'entrainement (par exemple 18A) venant alors se coupler sur l'une des roues dentées (par exemple 36A) du ou des trains d'engrenages. Outre cette fonction de support d'accessoires, ces faces latérales assurent aussi une fonction de support de roulement, d'étanchéité ou encore de lubrification. Lors du fonctionnement de la turbomachine, une partie de la puissance mécanique générée est prélevée sur le rotor 26 de la turbomachine et transmise via l'arbre de transmission de puissance 28 et le ou les trains d'engrenages 36 aux arbres d'alimentation des différents accessoires montés sur le boîtier 10 pour les entrainer en rotation et ainsi actionner la fonction pour laquelle chacun des accessoires est destiné.

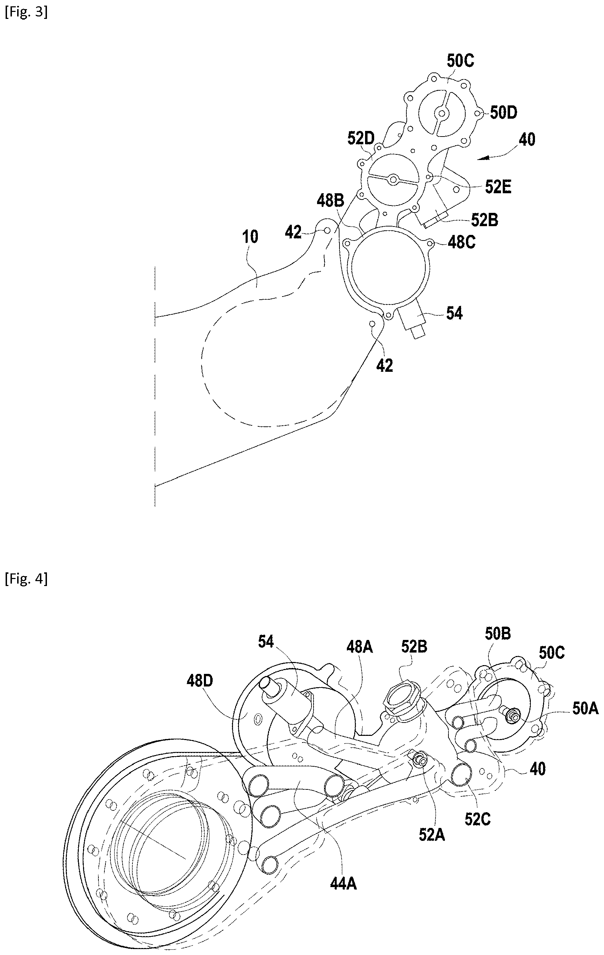

Selon l'invention et comme le montrent les figures 2 à 4, il est prévu que les équipements carburant soient montés sur une platine 40 indépendante ayant deux faces opposées 40A, 40B et dont une face est fixée en partie à une extrémité d'une face latérale du boitier d'entrainement d'accessoires 10 par des moyens de fixation 42 de type boulons par exemple, une partie de cette platine se trouvant déportée hors de ce boitier d'entrainement d'accessoires et pouvant donc recevoir des équipements sur ses deux faces (voir la figure 3).

Par équipements carburant, on entend, sans que cette liste soit toutefois limitative, la pompe à carburant principale 44 (dite aussi MFP pour « Main Fuel Pump »), le doseur de carburant 46 (dite aussi FMU pour « Fuel Metering Unit »), le filtre à carburant principal 48 (dit aussi MFF pour « Main Fuel Filter »), le réchauffeur de carburant 50 (dit aussi SFH pour « Servo Fuel Heater »), l'échangeur de chaleur principal 52 (dit aussi MHX pour « Main Heat exchanger »), le capteur à pression différentielle (Delta/P) du filtre à carburant 54 (dit aussi FFDP pour « Fuel Filter Differential Pressure sensor) (on suppose ici que ce capteur est un équipement indépendant et pas un élément d'un équipement, en l'espèce le filtre, au contraire du clapet de surpression ou du by-pass, mentionnés ensuite). A l'exception de la pompe à carburant principale 44 qui doit être entrainée par le boitier d'entrainement d'accessoires 10, les autres équipements précités 46-54 présentent la particularité de ne pas nécessiter un tel entrainement et donc une distribution de puissance depuis l'arbre de la turbomachine 26.

En regroupant les équipements carburant sur une même platine, accrochée à une extrémité du boitier d'entrainement d'accessoires 10, on limite le supportage et le nombre de canalisations reliant ces équipements. En outre, en intégrant une partie de ces équipements dans la platine elle-même, on assure un compactage maximal de l'installation soit un gain en masse certain (par exemple de l'ordre de 25%) ainsi qu'une facilité de montage/démontage et de maintenance.

La figure 4 illustre plus particulièrement la platine 40 intégrant tout ou partie de ces équipements au niveau de ses interfaces avec ces équipements.

Plus précisément, concernant le doseur de carburant 46, on peut noter que la platine intègre, outre les canalisations (non représentées) de circulation du fluide en entrée et en sortie du doseur, un support 46A (visible sur la figure 2) du corps de ce doseur destiné à recevoir les moyens de fixation platine/doseur 46B.

Par contre, concernant le filtre à carburant principal 48, on peut noter que la platine intègre également les canalisations 48A de circulation du fluide en entrée et en sortie pour la cartouche filtrante du filtre et un support 48B du corps de ce filtre destiné à recevoir les moyens de fixation platine/filtre 48C (visible sur la figure 2). La platine intègre en outre aussi une partie de corps de ce filtre 48D (visible sur la figure 2), à savoir le fond du bol destiné à recevoir la cartouche filtrante ainsi que le capteur delta/P 54. Ce transfert dans la platine d'une partie de la fonction du filtre à carburant, et l'intégration dans la platine de la fonction du capteur Delta/P, participent de façon importante au gain en masse.

De même, concernant le réchauffeur de carburant 50, on peut noter que la platine intègre, outre les canalisations 50B de circulation du fluide en entrée et en sortie du réchauffeur et un support 50C du corps de ce réchauffeur destiné à recevoir les moyens de fixation platine/réchauffeur 50D (visible sur la figure 2), une partie de corps de ce réchauffeur, à savoir la partie inférieure de l'enveloppe 50E (visible sur la figure 2) du réchauffeur destinée à recevoir la matrice d'échange de ce réchauffeur ainsi que son clapet de surpression 50A.

Concernant l'échangeur de chaleur principal 52, on peut noter que la platine intègre, outre les canalisations 52C de circulation du fluide en entrée et en sortie de l'échangeur et un support 52D (visible sur la figure 2) du corps de cet échangeur destiné à recevoir les moyens de fixation platine/échangeur 52E (visible sur la figure 2), une partie de corps de cet échangeur, à savoir la partie inférieure de l'enveloppe 52F (visible sur la figure 2) de l'échangeur destinée à recevoir sa matrice d'échange ainsi que son clapet de surpression 52A ainsi que son by-pass 52B.

Pour les deux précédents équipements, le transfert dans la platine d'une partie de la fonction du réchauffeur de carburant ou de l'échangeur de chaleur principal, et l'intégration dans la platine de la fonction du clapet de surpression, participent de façon importante au gain en masse.

Enfin, s'agissant de la pompe à carburant principale 44, on peut noter que la platine 40 intègre, outre les canalisations 44A de circulation du fluide en entrée et en sortie de la pompe, un support 44B (visible sur la figure 2) du corps de pompe destiné à recevoir les moyens de fixation platine/pompe 44C (visible sur la figure 2). On notera que cette platine 40 est traversée par l'arbre d'entrainement 44D de la pompe (visible sur la partie éclatée de la figure 2), et qu'elle permet ainsi d'assurer le centrage (support et guidage) de cet arbre 44D destiné à être relié à un pignon de la boite d'accessoires1 0.

## Revendications

1. Platine d'équipements hydrauliques d'une turbomachine aéronautique comportant des canalisations de circulation d'un fluide en entrée et en sortie de chacun desdits équipements hydrauliques (44, 46, 48, 50, 52), une partie support d'un corps de boitier (46A, 48B, 50C, 52D) de chacun desdits équipements hydrauliques (46, 48, 50, 52) destiné à recevoir des moyens de fixation (46B, 48C, 50D, 52E) auxdits équipements hydrauliques, **caractérisée en ce qu'**elle comprend en outre une partie de corps de boitier (48D) de l'un au moins desdits équipements hydrauliques (48).

2. Platine d'équipements hydrauliques selon la revendication 1, destinée à être fixée à un boitier d'entrainement d'accessoires (10) de la turbomachine aéronautique, **caractérisée en ce qu'**elle comporte en outre une partie destinée à être déportée par rapport au boitier d'entrainement d'accessoires, ladite partie déportée de la platine permettant la fixation d'équipements hydrauliques sur ses deux faces (40A, 40B).

3. Platine d'équipements hydrauliques selon la revendication 1 ou la revendication 2, **caractérisée en ce que** lesdits équipements hydrauliques sont choisis parmi les équipements suivants : une pompe à carburant principale (44), un doseur de carburant (46), un filtre à carburant principal (48), un réchauffeur de carburant (50), un échangeur de chaleur principal (52).

4. Platine d'équipements hydrauliques selon la revendication 3, comportant au moins le filtre à carburant principal (48), **caractérisée en ce que** la partie de corps de boitier dudit équipement hydraulique est une partie de fond d'un bol destiné à recevoir une cartouche filtrante du filtre.

5. Platine d'équipements hydrauliques selon la revendication 4, **caractérisée en ce qu'**elle comporte en outre un capteur à pression différentielle (Delta/P) (54) du filtre.

6. Platine d'équipements hydrauliques selon la revendication 3, comportant au moins le réchauffeur de carburant (50) ou l'échangeur de chaleur principal (52), **caractérisée en ce que** la partie de corps de boitier dudit équipement hydraulique est une partie inférieure de l'enveloppe du réchauffeur ou de l'échangeur destinée à recevoir une matrice d'échange.

7. Platine d'équipements hydrauliques selon la revendication 6, **caractérisée en ce qu'**elle comporte en outre un clapet de surpression (50A, 52A) du réchauffeur ou de l'échangeur.

8. Platine d'équipements hydrauliques selon la revendication 3, comportant au moins l'échangeur de chaleur principal (52), **caractérisée en ce qu'**elle comporte en outre un by-pass (52B).

9. Platine d'équipements hydrauliques selon la revendication 3, comportant au moins la pompe à carburant principale (44), **caractérisée en ce que** la partie de corps de boitier dudit équipement hydraulique est une partie inférieure du corps de pompe destinée à supporter et guider un arbre d'entrainement (44D) de la pompe.

10. Système d'accessoires comprenant une platine d'équipements hydrauliques selon l'une quelconque des revendications 2 à 9, et un boitier d'entrainement d'accessoires (10) sur lequel la platine d'équipements hydrauliques est fixée de façon déportée.

## Patentansprüche

1. Platine für hydraulische Ausrüstungen einer Turbomaschine für ein Flugzeug, die Leitungen zur Umwälzung eines Fluids an dem Einlass und an dem Auslass jeder der hydraulischen Ausrüstungen (44, 46, 48, 50, 52) beinhaltet, wobei ein Trägerteil eines Gehäusekörpers (46A, 48B, 50C, 52D) einer jeden der hydraulischen Ausrüstungen (46, 48, 50, 52) dazu bestimmt ist, Mittel zur Befestigung (46B, 48C, 50D, 52E) an den hydraulischen Ausrüstungen aufzunehmen, **dadurch gekennzeichnet, dass** sie ferner einen Gehäusekörperteil (48D) der zumindest einen der hydraulischen Ausrüstungen (48) umfasst.

2. Platine für hydraulische Ausrüstungen nach Anspruch 1, die dazu bestimmt ist, an einem Gehäuse (10) eines Getriebes für Hilfseinrichtungen der Turbomaschine für ein Flugzeug befestigt zu werden, **dadurch gekennzeichnet, dass** sie ferner einen Teil umfasst, der dazu bestimmt ist, in Bezug auf das Gehäuse des Getriebes für Hilfseinrichtungen versetzt zu sein, wobei der versetzte Teil der Platine die Befestigung von hydraulischen Ausrüstungen auf ihren beiden Seiten (40A, 40B) erlaubt.

3. Platine für hydraulische Ausrüstungen nach Anspruch 1 oder Anspruch 2, **dadurch gekennzeichnet, dass** die hydraulischen Ausrüstungen unter den folgenden Ausrüstungen ausgewählt sind: einer Haupt-Brennstoffpumpe (44), einem Brennstoff-Dosierer (46), einem Haupt-Brennstofffilter (48), einem Brennstoff-Vorwärmer (50), einem Haupt-Wärmetauscher (52).

4. Platine für hydraulische Ausrüstungen nach Anspruch 3, die zumindest den Haupt-Brennstofffilter (48) beinhaltet, **dadurch gekennzeichnet, dass** der Gehäusekörper der hydraulischen Ausrüstung ein Teil des Bodens einer Schale ist, die dazu bestimmt ist, eine Filterkartusche des Filters aufzunehmen.

5. Platine für hydraulische Ausrüstungen nach Anspruch 4, **dadurch gekennzeichnet, dass** sie ferner einen Differenzdrucksensor (Delta/P) (54) des Filters beinhaltet.

6. Platine für hydraulische Ausrüstungen nach Anspruch 3, die zumindest den Brennstoff-Vorwärmer (50) oder den Haupt-Wärmetauscher (52) beinhaltet, **dadurch gekennzeichnet, dass** der Teil des Gehäusekörpers der hydraulischen Ausrüstung ein unterer Teil der Hülle des Vorwärmers oder des Wärmetauschers ist, der dazu bestimmt ist, eine Tauschmatrix aufzunehmen.

7. Platine für hydraulische Ausrüstungen nach Anspruch 6, **dadurch gekennzeichnet, dass** sie ferner ein Überdruckventil (50A, 52A) des Vorwärmers oder des Wärmetauschers beinhaltet.

8. Platine für hydraulische Ausrüstungen nach Anspruch 3, die zumindest den Haupt-Wärmetauscher (52) beinhaltet, **dadurch gekennzeichnet, dass** sie ferner einen Bypass (52B) beinhaltet.

9. Platine für hydraulische Ausrüstungen nach Anspruch 3, die zumindest die Haupt-Brennstoffpumpe (44) beinhaltet, **dadurch gekennzeichnet, dass** der Teil des Gehäusekörpers der hydraulischen Ausrüstung ein unterer Teil des Pumpenkörpers ist, der dazu bestimmt ist, eine Antriebswelle (44D) der Pumpe zu tragen und zu führen.

10. Hilfseinrichtungs-System, umfassend eine Platine für hydraulische Ausrüstungen nach einem der Ansprüche 2 bis 9 und ein Gehäuse eines Getriebes für Hilfseinrichtungen (10), an welchem die Platine für hydraulische Ausrüstungen auf versetzte Weise befestigt ist.

## Claims

1. A plate of pieces of hydraulic equipment of an aeronautical turbomachine comprising channels for circulation of fluid entering and leaving each of said pieces of hydraulic equipment (44, 46, 48, 50, 52), a support part of a housing body (46A, 48B, 50C, 52D) of each of said pieces of hydraulic equipment (46, 48, 50, 52) intended to receive fastening means (46B, 48C, 50D, 52E) to said pieces of hydraulic equipment, **characterized in that** it further comprises a housing body part (48D) of at least one of said pieces of hydraulic equipment (48).

2. The plate of pieces of hydraulic equipment according to claim 1, intended to be fixed to an accessory drive gearbox (10) of the aeronautical turbomachine, **characterised in that** it further comprises a part intended to be offset with respect to the accessory drive gearbox, said offset part of the plate allowing the fastening of pieces of hydraulic equipment on both faces (40A, 40B).

3. The plate of pieces of hydraulic equipment according to claim 1 or claim 2, **characterised in that** said pieces of hydraulic equipment are selected from the following pieces of equipment: a main fuel pump (44), a fuel dispenser (46), a main fuel filter (48), a fuel reheater (50), a main heat exchanger (52).

4. The plate of pieces of hydraulic equipment according to claim 3, comprising at least the main fuel filter (48), **characterised in that** the housing body part of said hydraulic equipment is a base part of a bowl intended to receive a filter cartridge of the filter.

5. The plate of pieces of hydraulic equipment according to claim 4, **characterised in that** it further comprises a differential pressure sensor (Delta/P) (54) of the filter.

6. The plate of pieces of hydraulic equipment according to claim 3, comprising at least the fuel reheater (50) or the main heat exchanger (52), **characterised in that** the housing body part of said hydraulic equipment is a lower part of the envelope of the reheater or of the exchanger intended to receive an exchange matrix.

7. The plate of pieces of hydraulic equipment according to claim 6, **characterised in that** it further comprises a relief valve (50A, 52A) of the reheater or of the exchanger.

8. The plate of pieces of hydraulic equipment according to claim 3, comprising at least the main heat exchanger (52), **characterised in that** it further comprises a by-pass (52B).

9. The plate of pieces of hydraulic equipment according to claim 3, comprising at least the main fuel pump (44), **characterised in that** the housing body part of said hydraulic equipment is a lower part of the pump body intended to support and guide a drive shaft (44D) of the pump.

10. A system of accessories comprising a plate of pieces of hydraulic equipment according to any one of claims 2 to 9, and an accessory drive gearbox (10) on which the plate of pieces of hydraulic equipment is fixed in an offset manner.
